# EUROPEAN PATENT SPECIFICATION

(11) **EP 2 163 877 B1**
(45) Date of publication and mention of the grant of the patent: **11.11.2015**
(21) Application number: 09169838.1
(22) Date of filing: 09.09.2009
(51) Int. Cl.: G01M 17/08

(54) **A method for manufacturing a test device for rolling material and relative test method**
Verfahren zur Herstellung einer Testvorrichtung für Wellenmaterial und entsprechendes Testverfahren
Procédé pour la fabrication d'un dispositif de test pour matériel d'enroulement et procédé de test correspondant

(30) Priority: 10.09.2008 IT TO20080664
(43) Date of publication of application: 17.03.2010
(73) Proprietor: Politecnico di Torino, 10129 Torino (IT)
(72) Inventor: Bosso, Nicola, 13044, CRESCENTINO (IT); Soma', Aurelio, 12038, SAVIGLIANO (IT); Gugliotta, Antonio, 10025, PINO TORINESE (IT)
(74) Representative: Bergadano, Mirko

(56) References cited:
- DE-A1- 1 648 539
- DE-A1- 10 225 071
- DE-C1- 10 009 708

## Description

The present invention relates to a method for manufacturing a roller test rig and/or a rolling device, such as a pair of axles, a bogie or a coach, for the dynamic simulation of the operating conditions of said rolling device. The present invention also relates to a method for performing a test on the rig.

A roller rig comprises a fixed supporting structure and a plurality of rollers rotatable about parallel axes. In use a railway coach being tested comes into contact with the rollers that are driven by a motor when performing tests to assess the behaviour of a trailer car.

Prior art methods consist of reproducing on each roller the transverse profile and cant of the track, the characteristics of the profile being defined according to specific standards or customer specifications.

The use of a roller test rig considerably reduces the costs of dynamic testing on rolling devices, although the accuracy of the results that are obtained can be further improved.

Moreover, in order to determine the costs of the test, the production of scaled test rigs is known in the prior art. Various scaling techniques have been proposed to define the scale factors of the geometric, structural or dynamic dimensions.

Having defined the various scale factors, each technique is based on the assumption that certain scale factors are unitary and the remainder are calculated according to the normally non-linear laws of physics that are considered in defining the scaling method.

A scaled roller rig reduces the costs further but, here again, the accuracy with which certain values are defined can be improved, for instance the critical speed of the coach defined as the maximum speed at which the coach travels in a stable state along a straight path.

DE-1648539 discloses a test device for the dynamic simulation of a rolling device having two rotors, which are adapted to come into contact.

The purpose of the present invention is to provide a method for manufacturing a test device for the dynamic simulation of the operating conditions of rolling material that overcomes the drawback mentioned above.

The purpose of the present invention is achieved with a method according to claim 1.

In order to better understand the present invention, it will now be described in detail with reference to the accompanying drawings, in particular:
- figure 1 is a side view of a test rig and of a test bogie according to the present invention;
- figure 2 is a front view of the rig of figure 1; and
- figures 3 and 4 are enlarged front views of respective details of the test rig and of the bogie according to the present invention.

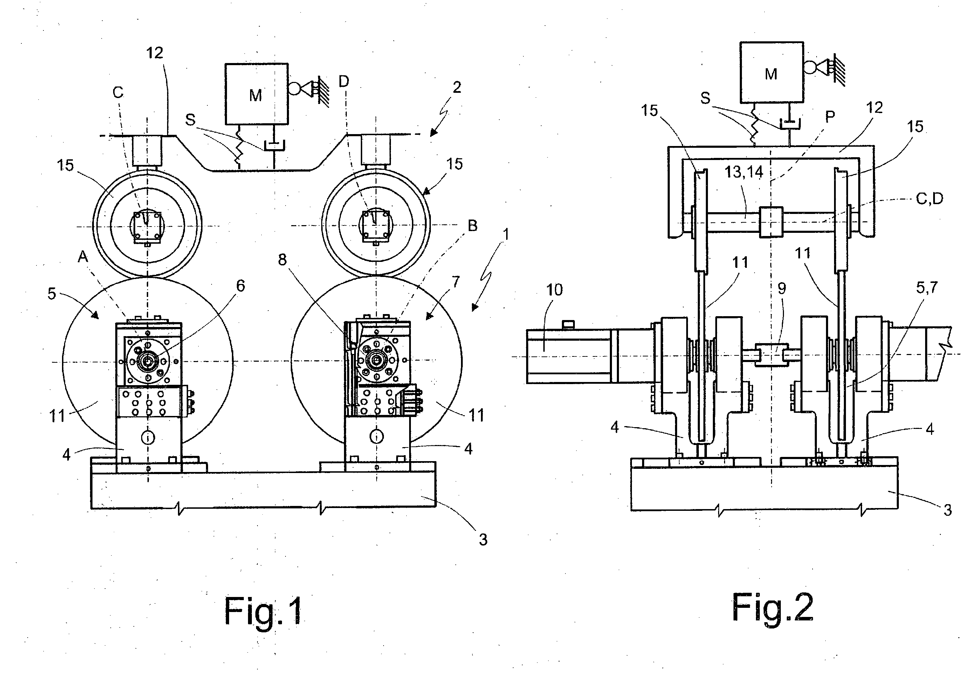

In figure 1 designated as a whole by number 1 is a test rig for the dynamic simulation of the operating conditions of a rolling device and designated as a whole by number 2 is an example of a rolling device, namely a railway bogie mounted during a test on the rig 1.

In particular, the rig 1 comprises a base 3 secured to the ground, four pillars 4 rising vertically from the base 3 and arranged at the vertices of a rectangle, a roller 5 rotatable about a horizontal axis A and fixed on relative supports 6 to two pillars 4 and a roller 7 rotatable about an axis B parallel to the axis A and fixed on relative supports 8 to the two remaining pillars 4.

Each roller 5, 7 comprises a shaft 9 connected to an electric motor 10 and a pair of wheels 11 that simulate a respective rectilinear track.

The bogie 2 comprises a frame 12, a mass M connected to the bogie by means of suspensions S to simulate a body of a railway coach, an axle 13 and an axle 14 supported by the frame 12 and, on each axle, a pair of wheels 15 that come into contact with the respective wheels 11. The axles 13, 14 are respectively rotatable about axes C and D. Preferably, the mass M of the bogie 2 is limited so as to only translate freely in the vertical direction. Translations of the mass M in a plane perpendicular to the direction of oscillation of the mass, that is in a horizontal plane, are blocked. The movement of the frame 12 is limited to that of the mass M by means of the suspensions S.

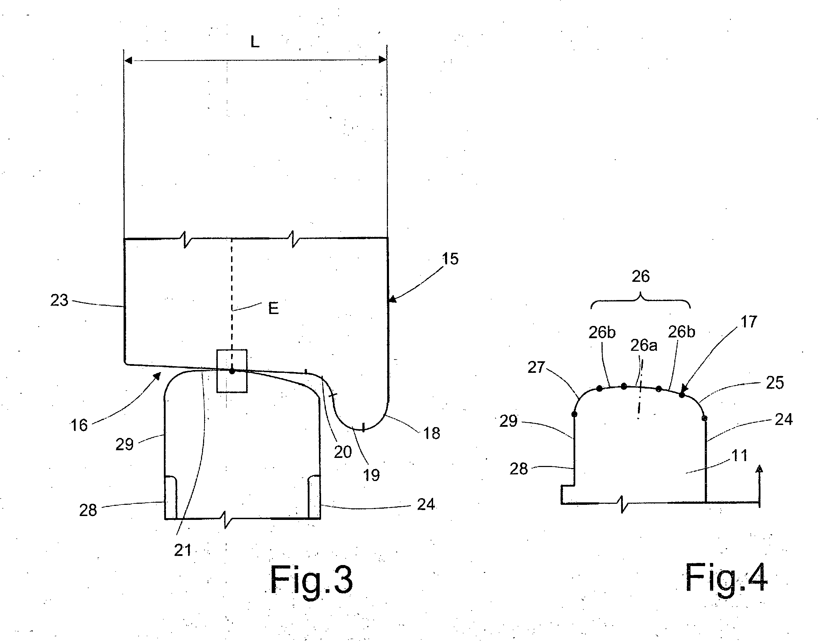

Each wheel 15 defines a rolling surface 16 having an axis A, B which can come into contact with a corresponding rolling surface 17 defined by the respective wheel 11 (figure 3). The rolling surface 16 can come into contact at different points with the rolling surface 17 depending on the condition simulated by the test rig.

The rolling surface 16 is designed in relation to the use of the bogie, for instance to carry goods or passengers, and can have a variable transverse profile and diameter.

In any case, the wheel 15 is provided with a flange 18 that contrasts yawing and centrifugal force on bends. The flange 18 is arranged on the innermost part of the wheel 15, that is towards a centre plane P of the axle 13, 14. Starting from the flange 18 and moving outwards, that is moving away from the centre plane P, a transverse section of the rolling surface 16 comprises in order a convex segment 19 that starts on the top of the flange 18, a concave connecting segment 20 and a rectilinear segment 21 for example having a taper of 0.3 radians, the transverse section being obtained through a plane entirely containing the axis C, D depending on whether the axle 13 or axle 14 is considered.

When the axle is centred on the roller 5, 7, the contact area is located along the rectilinear segment 21. When a curve characterized by a high centrifugal force value is simulated, the contact may move to the segments 19, 20, or 22, depending on the value of said centrifugal force. In any case, when the profile of the rolling surface 16 is assigned, a nominal contact diameter E is defined as the diameter passing through the geometric point of contact between wheel and track with the axle centred.

The rolling surface 17 of the wheel 11 (figure 4) is defined between two faces parallel and perpendicular to the axis A, B, the section being obtained through a plane entirely containing the axis A, B depending on whether roller 5 or roller 7 is considered. In particular, in sequence starting from an inner side face 24 of the wheel 11 facing the centre plane P, a transverse section of the rolling surface 17 has a connecting segment 25, a compound segment 26 and a connecting segment 27. The connecting segment 27 is joined to an outer side face 28 preferably by means of a slanting rectilinear segment 29.

At least the compound segment 26 comprises a plurality of circumferential arcs having respective variable curvature radii and a tangent in common at the point of connection. The compound segment 26 comprises at least one segment having a radius of curvature one order of magnitude longer than that of the connecting segments 25 and 27. Preferably the theoretical contact diameter comes into contact with said at least one segment when the axle follows a rectilinear path.

According to the present invention, the profile of the transverse section of the rolling surface 17 is modified with respect to the profile that is used on a rectilinear track.

When the Hertz theory is used to model wheel/track contact, the form of the area of contact between the wheel of a railway bogie and a track is an ellipse having a semi-major axis perpendicular to the axis of the track and a semi-minor axis parallel to said axis. As is known, in addition to the parameters describing the elastic properties of the materials, the Hertz theory also uses as variables the geometric properties of the contact surfaces, in particular the front curvature radius, i.e. that describes an osculating circle parallel to the centre plane P, and the transverse curvature radius, i.e. that describes an osculating circle perpendicular to the centre plane P.

Having assigned the geometry of the track and of the wheel, the theoretical semiaxes of the contact area and the form factor TR, defined as the ratio between the larger semi-axis with respect to the smaller semi-axis in case of contact between the wheel and the track, can be calculated.

It has been shown that when the transverse profile of the roller 11 is the same as that of the track, errors occur in the assessment of certain values, such as the critical speed of the rolling device. In particular, it is important to remember that the front curvature radius of the wheels 11 is finite and thus different from the infinite curvature radius of the track. This means that a form factor TB (defined in the same way as TR) on the roller rig is different from and, in particular, longer compared to the form factor TR on the track, the wheel of the axle and transverse profiles of the track/roller being equal.

It has been shown that a reduction in the form factor of the contact area TB on the test rig reduces the error of assessment of the critical speed. The best results were obtained for TB substantially equal to TR.

In order to reduce the form factor TB the transverse curvature of the rolling surface 16 or of the rolling surface 17 or of both is modified.

For instance, to modify the rolling surface 17 only, using a UIC60 track as reference, the compound segment 26 consists of a central segment 26a and two segments 26b arranged on opposite sides with respect to the central segment 26a and adjacent to the connections 25 and 27. In particular, the segments 26b have an intermediate curvature between that of the connections 25, 27 and of the segment 26a. The curvature of the segments 26a, 26b and of the connections 25, 27 is constant.

According to one embodiment, only a portion of the profile of the transverse section of the rolling surface 17 is modified, preferably that/those with the longest curvature radius. In case of a bevel wheel such as the wheel 15, the comparison between the modified values of the curvature radii (in mm) of the segments 25, 26 and 27 of the contact surface 17 with respect to the specification according to UIC 60 can be summarized as follows:

| | UIC60 | Modified profile |
|---|---|---|
| Segment 25 | 13 | 13 |
| Segment 26 | 300 / 80 | 125 / 80 |
| Segment 27 | 13 | 13 |

The modified curvature value is obtained using an iterative numerical method, for example bisection, which interrupts the value search when the error between the theoretical form factor on the test rig and the theoretical form factor in the wheel/track contact is less than a predefined threshold value. In the example that is illustrated the error threshold value is 1%. As regards the previous example, the segments 26b can also be modified.

To modify the rolling surface 16 only, the curvature radius of the segment 21 becomes finite and negative. In particular, the curvature radius is defined as positive if the centre of the osculating circle is on the same side of the axis A, B with respect to the contact area. Likewise, when the profile of the transverse section of the rolling surface 16 for the wheel 15 is also compound, it is possible to modify only the segment on which the contact area is located in the condition with the axle centered. In this case, the modified segment 21 is no longer rectilinear but convex with a negative curvature radius.

Thus, if the profile of the compound segment 26 is defined as convex and the segment 20 is defined as concave and the 'solid' part of each component is considered in order to define whether a segment of a surface is concave or convex, in order to reduce the form factor TB and, in particular, obtain TB = TR, the modulus of the curvature radius of a convex segment of the profile of the transverse section should be reduced and the modulus of the curvature radius of a concave segment should be increased to achieve the rectilinear geometry. Beyond the rectilinear geometry, the segment becomes convex and the previous observations apply.

According to an alternative embodiment, the entire transverse profile of the rolling surface 16, 17 is modified with respect to the profile assigned to the track. In this case, the geometric modifications of the profile of the transverse section of the rolling surface 16, 17 could be extensive and such that, when the axle is centred, the contact area is located in a different area with respect to the profiles that are not modified. In this case, the gauge of the wheels 15 should be adjusted to centre the contact area on the nominal diameter E. After adjusting the gauge, the side clearance between the flange 18 and the inner side face 24 may change and this should be considered during simulation of a curve.

It is important to underline that in the test reference is made to theoretical geometric characteristics to avoid having to specify that said characteristics, when referred to actual parts, are subject to the normal factory tolerances.

When the test rig 1 is scaled, as mentioned previously, scaling methods should be used to define the correct factors for reducing/increasing the values used in the laws of physics to express the behaviour of the rolling device. Non-limiting examples of such values include linear rigidity, damping, time, the Young's modulus of the materials used, microslip force, i.e. the tangential force of friction on the area of contact.

For example, after assigning a linear scale factor F defined as the ratio between the modulus of the lengths of the full-scale components and that of the corresponding reduced-scale components, depending on the scaling techniques used, the force scale factor, i.e. the ratio between the modulus of the force applied to the full-scale bogie/track and that applied to the scaled rig, is not equal to the linear scale factor that has been assigned.

For example, if the linear scale factor is F = 5 (F = 1 is the value in case of full-scale dimensions), the force scale factor will vary from 25 with the 'Pascal' scaling method to 625 using the 'Iwnicki' force model (for instance for the definition of the scaling techniques used in this description and in the claims, reference should be made to the article 'Comparison of different scaling techniques for the dynamics of a bogie on roller rig' p.514 ISBN9026519451 ISSN0042-3114). Thus, if the test rig has linear dimensions that are 5 times smaller than a full-scale bogie and track, the forces that are applied must be reduced by 25 times if using the 'Pascal' technique and by 625 times if using the 'Iwnicki' method.

On the basis of the above description, on a scaled test rig, the curvatures of the profiles are reduced according to the linear scale factor.

In the description below a primed reference number refers to a scaled test rig, more specifically to a component having the same function as the corresponding component of the full-scale test rig 1.

For example, for a linear scale factor of F = 5, a transverse profile of the contact surface 17' of the wheel 11' that must model a track according to UIC 60 will have the following curvature radii:

| | UIC60 (scale 5) | Modified profile |
|---|---|---|
| Segment 25 | 2.6 | 2.6 |
| Segment 26 | 60 / 16 | 25 / 16 |
| Segment 27 | 2.6 | 2.6 |

In the field of scaled test rigs, according to the present invention it has been found that the error is best reduced when the form factor of the contact area is substantially unchanged from a condition with the non-modified profiles of the full-scale transverse segments to the condition in which the profiles have been modified on a reduced scale, i.e. TR = TB'. This requires a variation of the transverse curvature in order to reduce the form factor TB' which would be obtained simply by dividing by the scale factor F the curvatures assigned, for example by UIC 60, which define the transverse profile segments of the rolling surface 17.

It has been shown that the use of said hypotheses associated with the 'Jaschinski' scaling technique reduces the error of calculation of the critical speed by half, from approximately 20% to less than 10%.

Lastly it is clear that modifications and variations may be made without departing from the scope of the present invention, as set forth in the claims.

When the transverse profile is only modified on the wheels 15, the test rig 1 remains unchanged and can have full-scale or reduced-scale dimensions. Both the test rig and the bogie can thus be defined as a test device having rotors with a modified transverse profile for performing dynamic tests.

In particular, the bogie can be replaced with axles connected to the pillars 4 by means of specific supports.

The motor can be connected to one of the axles and the corresponding roller 5, 7 be driven.

The simulation of the railway coach is performed most accurately by using two test rigs identical to those described, one for a front bogie and the other for a rear bogie.

## Claims

1. A method for manufacturing a test device (1) for the dynamic simulation of the behavior of a rolling device (2), said test device (1) comprising at least one wheel (11) rotatable about an axis (A; B), a further wheel (15) contacting said at least one wheel (11) and rotatable about a further axis (C; D), said at least one wheel (11) or further wheel (15) defining a respective first profile of a transverse section having a segment (26; 21) having a first transverse radius of curvature and defining the generating line of a rolling surface (17; 16), said method comprising the steps of:
- assigning a full-scale transverse radius of curvature of a reference segment of a rolling surface or of a wheel of a railway bogie or of a track of a railway line to be simulated by means of said test device (1);
- assigning the linear scale factor F of said test device;
- manufacturing said at least one wheel (11) or further wheel (15) so that said first transverse radius of curvature is shorter than the ratio between the second transverse radius of curvature and the scale factor F if said at least one segment (26; 21) is convex; or longer than said ratio if said at least one segment (26; 21) is concave.

2. The method according to claim 1, **characterized in that** it comprises the steps of:
- computing a theoretical form factor TB, TB' of a contact area between said at least one wheel (11) and said further wheel (15);
- computing a theoretical form factor TR of a contact area between a full-scale wheel and a full-scale track to be simulated;
- modifying said segment (26; 21) so that TB, TB' is substantially identical to TR.

3. A method for performing a test by means of a scaled test device designed according to any of the preceding claims, **characterized in that** it comprises the step of employing the 'Jaschinski' similitude model.

## Patentansprüche

1. Verfahren zur Herstellung einer Testvorrichtung (1) für die dynamische Simulation des Verhaltens einer Rollvorrichtung (2), wobei die Testvorrichtung (1) mindestens ein um eine Achse (A; B) drehbares Rad (11), ein weiteres Rad (15), das das mindestens eine Rad (11) kontaktiert und um eine weitere Achse (C, D) drehbar ist, aufweist, wobei das mindestens eine Rad (11) oder weitere Rad (15) ein entsprechendes erstes Profil eines Querschnitts definieren, das einen Abschnitt (26; 21) hat, das einen ersten Krümmungsradius in Querrichtung hat und die Mantellinie einer Abrollfläche (17; 16) definiert, wobei das Verfahren die folgenden Schritte aufweist:
- Zuweisen eines maßstabsgerechten Krümmungsradius in Querrichtung eines Referenzabschnitts einer Abrollfläche oder eines Rades eines Eisenbahndrehgestells oder einer Eisenbahnschiene, die/das mittels der Testvorrichtung (1) simuliert werden soll;
- Zuweisen des linearen Skalierungsfaktors (F) der Testvorrichtung;
- Herstellen des mindestens einen Rades (11) oder des weiteren Rades (15), so dass der erste Krümmungsradius in Querrichtung kürzer als das Verhältnis zwischen dem zweiten Krümmungsradius in Querrichtung und dem Skalierungsfaktor (F) ist, wenn der mindestens eine Abschnitt (26; 21) konvex ist; oder länger als das Verhältnis ist, wenn der mindestens eine Abschnitt (26; 21) konkav ist.

2. Verfahren nach Anspruch 1, **dadurch gekennzeichnet, dass** es die Schritte aufweist:
- Berechnen eines theoretischen Formfaktors TB, TB' einer Kontaktfläche zwischen dem mindestens einen Rad (11) und dem weiteren Rad (15);
- Berechnen eines theoretischen Formfaktors TR einer Kontaktfläche zwischen einem maßstabsgerechten Rad, das simuliert werden soll, und einer maßstabsgerechten Schiene, die simuliert werden soll;
- Modifizieren des Abschnitts (26; 21), so dass TB, TB' im Wesentlichen identisch mit TR ist.

3. Verfahren zur Durchführung eines Tests mittels einer skalierten Testvorrichtung, die nach einem der vorhergehenden Ansprüche ausgebildet ist, **dadurch gekennzeichnet, dass** das Verfahren den Schritt des Anwendens des "Jaschinski" Ähnlichkeitsmodells aufweist.

## Revendications

1. Procédé pour fabriquer un dispositif d'essai (1) pour la simulation dynamique du comportement d'un dispositif roulant (2), ledit dispositif d'essai (1) comprenant au moins une roue (11) pouvant tourner autour d'un axe (A ; B), une roue supplémentaire (15) en contact avec ladite au moins une roue (11) et pouvant tourner autour d'un autre axe (C ; D), ladite au moins une roue (11) ou la roue supplémentaire (15) définissant un premier profil respectif d'une section transversale ayant un segment (26 ; 21) ayant un premier rayon de courbure transversal et définissant la génératrice d'une surface de roulement (17 ; 16), ledit procédé comprenant les étapes consistant à :
- attribuer un rayon de courbure transversal à échelle réelle d'un segment de référence d'une surface de roulement ou d'une roue d'un chariot ferroviaire ou d'un rail d'une ligne ferroviaire à simuler au moyen dudit dispositif d'essai (1) ;
- attribuer le facteur d'échelle linéaire F dudit dispositif d'essai ;
- fabriquer ladite au moins une roue (11) ou roue supplémentaire (15) de sorte que ledit premier rayon de courbure transversal est plus court que le rapport entre le second rayon de courbure transversal et le facteur d'échelle F si ledit au moins un segment (26 ; 21) est convexe ; ou plus long que ledit rapport si ledit au moins un segment (26 ; 21) est concave.

2. Procédé selon la revendication 1, **caractérisé en ce qu'**il comprend les étapes consistant à :
calculer un facteur de forme TB, TB' théorique d'une empreinte de contact entre ladite au moins une roue (11) et ladite roue supplémentaire (15) ;
calculer un facteur de forme TR théorique d'une empreinte de contact entre une roue à échelle réelle et un rail à échelle réelle à simuler ;
modifier ledit segment (26 ; 21) de sorte que TB, TB' est sensiblement identique à TR.

3. Procédé pour réaliser un essai au moyen d'un dispositif d'essai à l'échelle conçu selon l'une quelconque des revendications précédentes, **caractérisé en ce qu'**il comprend l'étape consistant à utiliser le modèle de similitude de "Jaschinski".
